# FASCICULE DE BREVET EUROPEEN

(11) **EP 0 384 853 B1**
(45) Date de publication et mention de la délivrance du brevet: **28.09.1994**
(21) Numéro de dépôt: 90420016.9
(22) Date de dépôt: 10.01.1990
(51) Int. Cl.: F01N 3/28, B01D 53/36, B32B 1/00, F01N 7/08

(54) **Pot catalytique pour véhicules automobiles**
Katalysator für Autoabgase
Catalyst for motor vehicle exhaust gases

(30) Priorité: 16.02.1989 FR 8902370
(43) Date de publication de la demande: 29.08.1990
(73) Titulaire: Boubehira, Mohammed, F-69500 Bron (FR)
(72) Inventeur: Boubehira, Mohammed, F-69500 Bron (FR)
(74) Mandataire: Guerre, Dominique

(56) Documents cités:
- EP-A- 0 171 624
- DE-A- 2 226 761
- DE-A- 2 333 816
- DE-A- 2 555 038
- DE-A- 3 210 697
- DE-A- 3 708 696
- DE-U- 8 810 319
- FR-A- 2 267 448
- FR-A- 2 589 786
- GB-A- 418 790
- GB-A- 1 107 550
- GB-A- 1 459 632
- US-A- 3 003 810
- US-A- 3 206 414
- US-A- 3 709 772
- US-A- 4 032 310

## Description

La présente chimique concerne de manière générale les réacteurs chimiques destinés au traitement par réacteur chimique d'un mélange gazeux, au contact d'un matériau catalytique approprié, spécifique à la réaction chimique précitée.

De tels réacteurs chimiques peuvent recevoir application dans toutes sortes de domaines techniques. Ceci étant, la présente invention s'intéresse plus particulièrement, mais non exclusivement au traitement ou à la conversion chimique d'effluents gazeux, comprenant divers polluants tels que dioxyde de soufre, oxydes d'azote, hydrocarbures imbrûlés, monoxyde de carbone, etc...; de tels effluents résultent en particulier de processus de combustion tels que rencontrés dans les chaudières individuelles, collectives, ou industrielles.

A titre préférentiel, l'invention s'intéresse à la dépollution des gaz d'échappement d'un moteur thermique à combustion interne, c'est-à-dire à la conversion chimique, en présence de matériaux catalytiques appropriés, des effluents gazeux de la combustion de différents combustibles ou produits pétroliers, tels qu'essence, gazole, etc... A ce titre, l'invention s'intéresse aux pots catalytiques, tels que déjà utilisés et proposés pour des véhicules automobiles, particuliers ou utilitaires, lesquels constituent des réacteurs chimiques au sens de la définition générale précédente.

Selon DE-A-2 555 038, il est proposé un réacteur de conversion des gaz polluants, comprenant deux couches de matériau catalytique, qui sont successivement traversées par les gaz à traiter, la première couche étant constituée de matériaux nobles, notamment choisis parmi Pt, Pd, Ru, et la seconde étant constituée de métaux non nobles. La principal inconvénient de ce réacteur est son coût élevé dû à la présence de métaux nobles nécessaires à la catalyse.

Conformément au document US-A-3 247 665, on a proposé un pot catalytique formant pot d'échappement ou silencieux, communiquant avec le collecteur d'échappement d'un moteur à combustion interne. Ce pot catalytique formant réacteur chimique comporte :
- une paroi d'ensemble délimitant, d'un côté un distributeur des gaz d'échappement reçus du moteur thermique, et de l'autre côté un collecteur des gaz d'échappement traités ou convertis
- une pluralité de récipients cylindriques de traitement chimique, disposés entre le distributeur et le collecteur, pourvus chacun d'une entrée pour une partie des gaz d'échappement à traiter, et d'une sortie pour ladite partie des gaz traitée ou convertie; dans chaque récipient est disposée une masse d'un matériau catalytique, permèable au passage des gaz entre l'entrée et la sortie du récipient; ce matériau catalytique sous forme solide est constitué pour l'essentiel par une matière active catalytiquement vis-à-vis de l'oxydation des gaz d'échappement, en l'occurrence un métal tel que de l'acier inoxydable sous forme de laine; le matériau catalytique est donc constitué pour l'essentiel par la matière catalytique elle-même, sous forme divisée, à l'exclusion de tout substrat pour le support superficiel de ladite matière.

Une telle solution présente un inconvénient majeur du à la morphologie du matériau catalytique. En effet, ce dernier est sous une forme physique qui permet de contrôler la perméabilité de la masse catalytique d'un récipient donné, et donc le temps de passage effectif des gaz traités dans ce récipient, mais cette perméabilité évolue avec le temps, puisque les fibres se tassent progressivement, entravant ainsi le passage des gaz.

Une solution à cet inconvénient est apportée avec la matière catalytique du réacteur décrit dans le document GB-A-418 790 et qui présente une perméabilité intrinsèque contrôlable. Celle-ci résulte d'une conversion physique de la matière catalytique, obtenue par frittage. Le frittage est réalisé sous atmosphère oxydante et le matériau catalytique qui initialement est de nature métallique subit également une conversion chimique en étant transformé en oxyde métallique.

La conversion chimique retenue, dans les documents précités, à savoir post-combustion sans flamme des hydrocarbures imbrûlés et du monoxyde de carbone, d'une part ne permet pas de traiter ou convertir les oxydes d'azote, et d'autre part, et surtout, nécessite l'ajout préalable d'air ou oxygène complémentaire, ce qui complique l'alimentation ou la construction du pot catalytique.

La présente invention a pour objet de remédier aux inconvénients précités.

L'invention a pour objet un matériau catalytique spécifique d'une conversion chimique des gaz d'échappement, sans ajout préalable d'air ou d'oxygène, permettant également le traitement des oxydes d'azote.

L'invention a aussi pour objet un mode de construction du réacteur ou pot catalytique, amenant sa température de travail dans une zone favorable à un rendement optimum.

Ces objectifs sont satisfaits selon l'invention par les caractéristiques techniques de la revendication 1.

La matière active catalytique est spécifique à la réaction chimique dite du gaz à l'eau, et consistant dans les équilibres chimiques suivants : 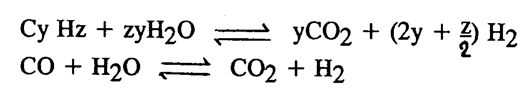
Ces deux réactions permettent, d'une part de traiter les hydrocarbures imbrûlés et le monoxyde de carbone, même en l'absence d'oxygène, et d'autre part de former de l'hydrogène qui peut traiter les oxydes d'azote, tels que NO selon la réaction suivante :

NO + H₂ → 1/2 N₂ + H₂O

A cet effet, la matière catalytique est constituée pour l'essentiel par un métal ou mélange de métaux choisis dans le groupe comprenant le fer, le nickel, le cuivre, le cobalt, le chrome et le cadmium.

La matière active catalytique retenue est façonnable par frittage, et le matériau catalytique, nécessaire pour constituer la masse disposée dans le récipient de traitement, est obtenu par un frittage partiel de la matière active, laissant subsister dans cette dernière des passages ou pores ouverts, pour la circulation interne du mélange gazeux à traiter au contact de la surface de la matière active.

Une telle morphologie du matériau catalytique, sous forme de conglomérat de grains liés entre eux, permet de multiplier les sites actifs de catalyse, et donc d'améliorer l'efficacité de la matière active catalytique.

Au sens de la présente invention, il convient de distinguer le terme "matière catalytique ", qui désigne le produit ayant un effet catalytique vis-à-vis de la ou des réactions chimiques du traitement des gaz, du terme "matériau catalytique" qui désigne le produit final disposé dans le récipient de traitement, obtenu par frittage, notamment à partir de la matière catalytique de départ.

La paroi du pot catalytique, et/ou celle du récipient de traitement sont faites selon un sandwich plastique comprenant, de l'extérieur vers l'intérieur, une peau externe en stratifié antichoc, une âme en mousse plastique anti-feu, et une peau interne résistant à la corrosion, notamment à température élevée.

Une telle structure sandwich ou composite permet d'apporter une bonne isolation thermique, mais aussi une bonne inertie thermique, plaçant ensemble le matériau catalytique dans une zone de température relativement plus élevée, de l'ordre de 300 à 400°C, favorable à un rendement optimum des réactions chimiques de conversion. Pour les mêmes raisons, une telle structure autorise l'activation quasi-immédiate de la matière catalytique, sous l'effet de la chaleur sensible des gaz d'échappement

Pour terminer, la présente invention peut être avantageusement mise en oeuvre selon les modalités suivantes :
- le récipient de traitement constitue une cartouche consommable et interchangeable, selon ou en fonction du taux d'inactivation du matériau catalytique contenu par ladite cartouche
- le pot catalytique est agencé pour avoir accès à ladite cartouche, et remplacer une cartouche usagée par une cartouche neuve, avec fermeture du pot.

Cette solution est en particulier économiquement compatible avec des matières catalytiques peu chères telles que le fer ou le cuivre, par rapport à des matières catalytiques beaucoup plus rares, telles que les métaux nobles, platine par exemple. Cette solution apporte un nouveau concept de pot catalytique ou de pot d'échappement, entretenu périodiquement comme le moteur ou son filtre à huile, par remplacement de la cartouche de traitement catalytique. Un tel remplacement peut intervenir après le contrôle de son efficacité, par exemple avec un banc d'analyse des gaz d'échappement évacués du véhicule automobile. Les garages et stations service actuels peuvent procéder à un tel remplacement, sans équipement ou outillage supplémentaire.

La présente invention est maintenant décrite par référence aux dessins annexés, dans lesquels :
- la figure 1 représente à échelle agrandie un grain d'un matériau catalytique conforme à l'invention, avec arrachement partiel montrant la structure interne dudit matériau
- la figure 2 représente, toujours à échelle agrandie, une pastille d'un matériau catalytique selon l'invention
- la figure 3 représente une galette d'un matériau catalytique selon l'invention
- la figure 4 représente, de manière schématique, un véhicule automobile équipé d'un pot catalytique selon l'invention , et plus précisement le circuit de circulation des gaz d'échappement à partir du moteur thermique à combustion interne
- la figure 5 représente, en coupe axiale, un pot catalytique selon l'invention, à écoulement parallèle à l'axe dudit pot
- la figure 6 représente un pot catalytique selon l'invention, toujours en coupe axiale, à écoulement perpendiculaire à l'axe dudit pot
- la figure 7 représente en coupe transervale, la paroi d'un réacteur chimique ou pot catalytique selon la présente invention

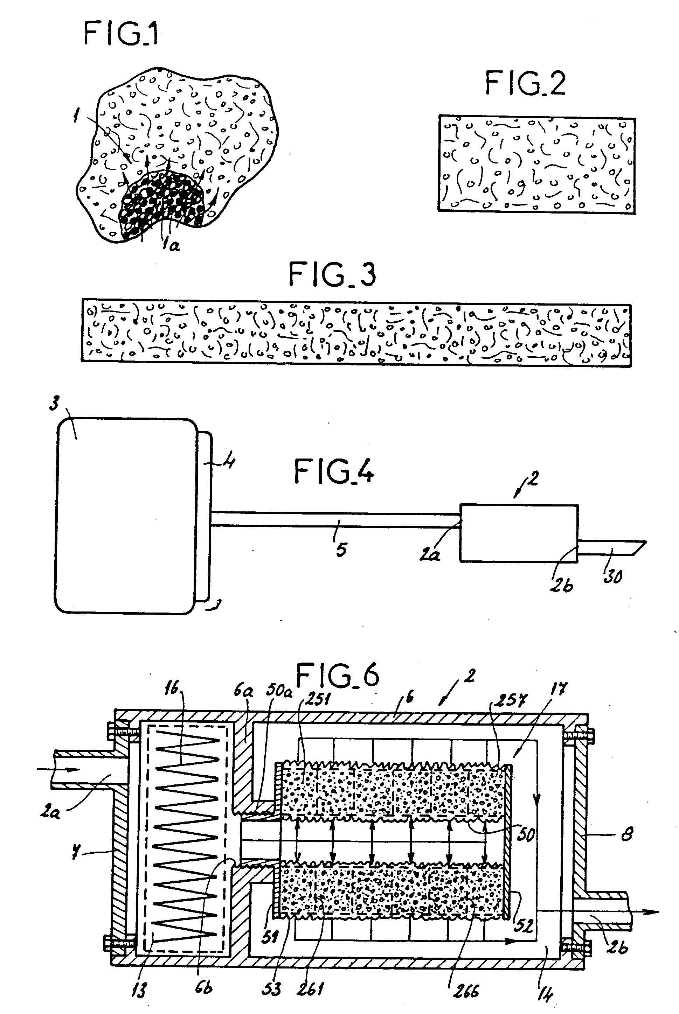

Conformément à la figure 1, le matériau catalytique selon l'invention se présente sous forme solide, mais divisée, par exemple sous forme de particules ou grains (1). Chaque grain ou particule (1) est constitué pour l'essentiel, et dans la masse, par la matière active catalytiquement, vis-a-vis de la ou des réactions chimiques dont il sera question ci-après. Cette matière active au plan catalytique est au moins un produit choisi dans le groupe comprenant le fer, le nickel, le cuivre, le cobalt, le chrome, et le cadmium. Les matières actives catalytiquement, retenues selon la présente invention, sont façonnables par frittage, et chaque grain (1) du matériau catalytique est obtenu par un frittage partiel de la matière active, laissant subsister dans cette dernière des passages ou pores (1a) ouverts, permettant ultérieurement une circulation interne du mélange gazeux à traiter, au contact de la surface interne de la matière active constitutive des grains (1). Par conséquent, selon l'invention, c'est tout le substrat des grains (1) qui est constitué par la matière active catalytique, et pas seulement la surface interne développée des grains (1).

Préférentiellement, les grains (1) sont obtenus par frittage de poudres ayant des particules inférieures à 60 »m, et comprises en particulier entre 0,1 et 10 »m.

Les poudres frittées partiellement selon l'invention peuvent comprendre, outre la matière active au plan catalytique, différents autres éléments ou produits, inertes ou non vis-à-vis de la réaction chimique catalysée, dès lors que lesdits éléments ou produits sont aptes à être frittés conformément à l'invention ; c'est ainsi que l'on peut mélanger de la silice à la poudre à fritter.

Conformément à la figure 2, le frittage partiel des poudres selon l'invention permet d'obtenir des pastilles, en lieu et place des grains ou granules selon la figure 1.

Conformément à la figure 3, le frittage partiel permet d'obtenir, à plus grande échelle, des galettes du matériau catalytique selon l'invention.

Conformément à la figure 4, le matériau catalytique, façonné selon l'une quelconque des figures 1 à 3, est mis en oeuvre dans un pot catalytique (2), constituant un reacteur chimique particulier, pour le traitement ou conversion chimique, en présence de vapeur d'eau et en une seule étape, des principaux polluants des gaz d'échappement d'un moteur thermique (3) à combustion interne. Ces gaz d'échappement sont collectés à la sortie du moteur (3) dans un collecteur (4), envoyés par une canalisation (5) à l'entrée (2a) du pot catalytique (2), et évacués, après traitement chimique, à la sortie (2b) du pot (2), par le tuyau (30).

Comme décrit ci-après, ce pot catalytique, grâce à la matière catalytique retenue et a la zone des températures de travail choisie, permet la mise en oeuvre de la réaction chimique dîte du gaz à l'eau, explicitée précédemment, et permettant de transformer les hydrocarbures non brûlés et l'oxyde de carbone, en gaz carbonique et hydrogène, ce dernier réduisant les oxydes d'azote.

Le réacteur chimique ou pot catalytique (2) est délimité par une paroi composée d'un corps cylindrique (6), et de deux plaques de fermeture, amont (7) et aval (8), comportant respectivement l'entrée (2a) et la sortie (2b), représentées à la figure 4. Les plaques (7) et (8) sont agencées, par exemple au moyen de vis et de filetages appropriés, pour être amovibles par rapport au corps (2), et permettre ainsi l'accès à l'intérieur de ce dernier.

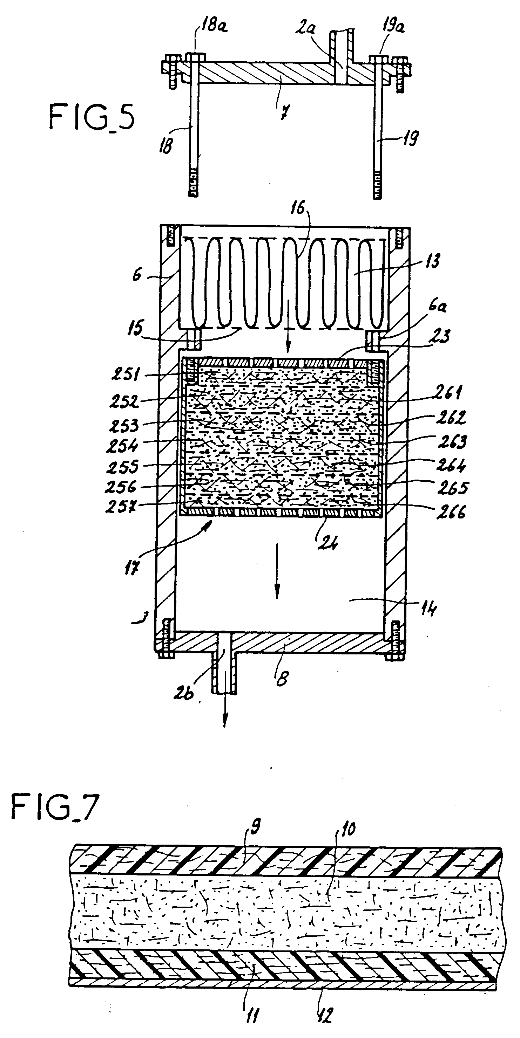

La paroi constituée par le corps (2) et les plaques (7) et (8), est réalisée en matériaux composites tels que représentés à la figure 7. Il s'agit d'un sandwich plastique comprenant de l'extérieur vers l'intérieur :
- une peau externe (9) ayant des propriétés anti-chocs, constituée par un stratifié d'une résine appropriée, à laquelle sont incorporées des fibres de renfort ; préférentiellement, la résistance aux chocs du stratifié obtenu est au moins égale à 50 kJ/m²
- une âme (10) en mousse plastique anti-feu, par exemple en mousse phénolique modifiée, ayant de bonnes propriétés d'amortissement des vibrations
- une peau interne (11) en stratifié, par exemple en epoxy-vinylester, renforcée par des fibres inertes, ayant une bonne résistance à la corrosion apportée par les gaz d'échappement, y compris à haute température
- éventuellement un revêtement interne (12) supplémentaire, assurant ou renforçant la protection contre la corrosion, tels que des silicones, ou un polymère fluoré.

Les fibres de renfort peuvent être de tous types, dès lors qu'elles sont inertes par rapport à la résine qu'elles renforcent. Il peut s'agir de fibres longues ou courtes, de fils, de tissus, ou de mats, en particulier de fibres de verre.

On obtient ainsi un corps de réacteur chimique particulièrement léger, et ayant par exemple une masse spécifique inférieure à 1,9 g/cm³, et présentant de très bonnes propriétés d'isolation et d'inertie thermique, favorables aux réactions chimiques se développant dans le réacteur (2). L'intérieur du réacteur (2) est constitué de deux compartiments successifs (13) et (14), de l'entrée (2a) à la sortie (2b).

Le premier compartiment (13) est limité, d'un côté par un épaulement (6a) appartenant au corps cylindrique (6), sur lequel repose une grille (15), et de l'autre côté par la plaque de fermeture (7). A l'intérieur de ce compartiment est disposé un matériau filtrant (16), sous la forme d'un feutre, par exemple de laine de verre, formé de plis consécutifs et adjacents. Le matériau (16) sert, non seulement à filtrer et retenir les particules en suspension dans les gaz d'échappement, mais aussi à ralentir ces derniers, tout en amortissant le bruit lié à l'échappement du moteur (3).

Le deuxième compartiment (14) comporte une cartouche remplaçable (17), ou enceinte de traitement chimique proprement dit. Cette cartouche est maintenue de manière amovible, à partir de la plaque de fermeture (7), grâce à des vis (18) et (19) dont la tige traverse des trous appropriés dans la plaque (7) et dans l'épaulement (6a), pour coopérer avec des filetages (20) et (21) prévus sur la cartouche (17). Par conséquent, en dévissant les vis (18) et (19), par manipulation avec un outil de leurs têtes (18a) et (19a), et par ouverture de la plaque de fermeture (8), il est possible d'accéder à la cartouche (17), et de l'extraire du corps (6).

La cartouche (17) proprement dite est constituée à partir de matériaux plastiques composites, tels que décrits précédemment par référence a la figure 7, par assemblage et collage d'un corps cylindrique (22), et de deux plaques circulaires perforées, d'entrée (23) et de sortie (24). Au sein de la cartouche sont disposées plusieurs lits (251 à 257) de particules du matériau catalytique selon la figure 1, séparés entre eux par des grillages (261 à 266).

A titre de variante, les différents lits (251 à 257) de la cartouche (17) peuvent être remplacés par un empilement de galettes selon la figure 3, séparées comme précédemment par des grilles (261 à 266).

Conformément à la figure 5, on a représenté une cartouche de traitement chimique, à écoulement parallèle.

Conformément à la figure 6, on a représenté un pot catalytique, avec cartouche (17) de traitement chimique, à écoulement perpendiculaire à l'axe du pot ou de la cartouche. A la figure 6, les mêmes références numériques que celles de la figure 5 désignent des éléments identiques ou ayant les mêmes fonctions.

Selon la figure 6, l'épaulement (6a) du corps (6) est pourvu d'un filetage (6b), permettant le vissage ou dévissage d'une tête extérieure et filetée (50a) d'un tube (50) appartenant à la cartouche (17). Cette dernière est constituée de plaques étanches (51) et (52), liées au tube axial (50), lequel passe dans une perforation centrale de la plaque (51), et est fermé à l'autre extrémité par la plaque (52). Le tube (50) est perforé dans sa partie interne, pour permettre le passage radial des gaz traités, de l'axe vers la périphérie de la cartouche (17).

Comme précédemment, différents lits ou galettes (251 à 257) du matériau catalytique sont empilés entre les deux plaques circulaires (51) et (52), ces lits ou galettes étant séparés comme précédemment par des grillages (261 à 266). La périphérie cylindrique de la cartouche (17) est fermée par un grillage (53), permettant l'évacuation des gaz traités.

Comme le montre la figure 4, le pot catalytique selon l'invention, formant silencieux, communique de manière étanche par le conduit (5) avec l'échappement (4) du moteur (3), compte-tenu de la réaction de traitement choisie, à savoir celle du gaz à l'eau. Il est aussi préférable dans ces conditions de prévoir un tube de liaison (5) en matériau composite, de manière à éviter tout refroidissement substantiel des gaz d'échappement vers le pot catalytique (2).

## Revendications

1. Pot (2) catalytique destiné à la conversion chimique en une seule étape des principaux polluants des gaz d'échappement d'un moteur thermique (3) à combustion interne, comprenant un récipient de traitement pourvu d'une entrée (23) pour les gaz d'échappement à traiter, et d'une sortie (24) pour les gaz d'échappement traités, une masse (251 à 257) d'un matériau catalytique disposée dans ledit récipient, perméable au passage des gaz d'échappement entre l'entrée et la sortie du récipient, ledit matériau catalytique étant constitué par une matière catalytique, à l'exclusion de tout substrat pour le support de ladite matière catalytique, façonnée par un frittage partiel, laissant subsister des passages ou pores ouverts (1a) pour la circulation interne des gaz d'échappement, au contact de la matière catalytique **caractérisé en ce que**, les gaz d'échappement comprenant pour l'essentiel de la vapeur d'eau, de l'oxyde de carbone, des hydrocarbures imbrûlés et des oxydes d'azote, sans ajout d'air ou oxygène complémentaire, la matière catalytique spécifique de la réaction chimique du gaz à l'eau est constituée pour l'essentiel par un métal ou mélange de métaux choisis dans le groupe comprenant le fer, le nickel, le cuivre, le cobalt, le chrome et le cadmium, les gaz d'échappement circulant au contact de la surface métallique du matériau catalytique.

2. Pot catalytique selon la revendication 1, caractérisé en ce que le matériau catalytique se présente sous forme de particules (1), par exemple des grains ou granules, ou pastilles (Fig.2).

3. Pot catalytique selon la revendication 1, caractérisé en ce que le matériau catalytique est façonné sous forme de galettes (Fig.3).

4. Pot catalytique selon la revendication 2, caractérisé en ce que la masse du matériau catalytique consiste en au moins une couche de particules dudit matériau, disposée entre deux grilles (23,24,261 à 266) retenant lesdites particules, et ceci entre l'entrée (23) et la sortie (24) du récipient de traitement.

5. Pot catalytique selon la revendication 3, caractérisé en ce que la masse du matériau catalytique consiste en au moins une galette (Fig.3) dudit matériau, retenue entre l'entrée (23) et la sortie (24) du récipient de traitement (17).

6. Pot catalytique selon la revendication 1, caractérisé en ce qu'il comporte une paroi d'ensemble (6,7,8) délimitant une enceinte, au sein de laquelle est disposé le récipient de traitement (17) et ladite paroi est un sandwich plastique comprenant de l'extérieur vers l'intérieur, une peau externe (9) en stratifié anti-choc, une âme (10) en mousse plastique anti-feu, et une peau interne (11) en stratifié, résistant à la corrosion à température relativement élevée.

7. Pot catalytique selon la revendication 1, caractérisé en ce que d'une part le récipient (17) de traitement constitue une cartouche consommable et interchangeable, selon le taux d'inactivation du matériau catalytique contenu par ladite cartouche, et d'autre part le pot catalytique (2) est agencé pour avoir accès à ladite cartouche, et remplacer une cartouche usagée par une cartouche neuve, avec fermeture du pot.

8. Véhicule automobile pourvu d'un moteur thermique (3) à combustion interne, équipé d'un pot catalytique (2) selon l'une quelconque des revendications 1 à 7, caractérisé en ce que le pot catalytique (2) communique avec le collecteur d'échappement (4) du moteur thermique, de manière étanche, c'est-à-dire sans introduction d'air auxiliaire à la conversion chimique des polluants.

9. Véhicule selon la revendication 8, caractérisé en ce que le tuyau (5) reliant le collecteur d'échappement et le pot catalytique (2) est réalisé en un matériau plastique composite.

## Claims

1. Catalytic unit (2) intended for the chemical conversion in a single stage of the main pollutants of the exhaust gases of an internal combustion heat engine (3), comprising a treatment vessel provided with an entry (23) for the exhaust gases to be treated and an exit (24) for the treated exhaust gases, a mass (251 to 257) of a catalytic material, arranged in the said vessel, permeable to the flow of the exhaust gases between the entry and the exit of the vessel, the said catalytic material consisting of a catalytic substance excluding any substrate for the support of the said catalytic substance, shaped by a partial sintering, leaving remaining open passages or pores (1a) for the internal circulation of the exhaust gases in contact with the catalytic substance, characterized in that, since the exhaust gases essentially comprise water vapour, carbon monoxide, unburnt hydrocarbons and nitrogen oxides, without the addition of supplementary air or oxygen, the catalytic substance specific to the water-gas chemical reaction essentially consists of a metal or mixture of metals chosen from the group comprising iron, nickel, copper, cobalt, chromium and cadmium, the exhaust gases circulating in contact with the metallic surface of the catalytic material.

2. Catalytic unit according to Claim 1, characterized in that the catalytic material is in the form of particles (1), for example of grains or granules, or pellets (Fig. 2).

3. Catalytic unit according to Claim 1, characterized in that the catalytic material is shaped in the form of cakes (Fig. 3).

4. Catalytic unit according to Claim 2, characterized in that the mass of the catalytic material consists of at least one layer of particles of the said material, arranged between two grids (23, 24, 261 to 266) retaining the said particles, this being between the entry (23) and the exit (24) of the treatment vessel.

5. Catalytic unit according to Claim 3, characterized in that the mass of the catalytic material consists of at least one cake (Fig. 3) of the said material, retained between the entry (23) and the exit (24) of the treatment vessel (17).

6. Catalytic unit according to Claim 1, characterized in that it comprises an overall wall (6, 7, 8) defining an enclosure, in which the treatment vessel (17) is arranged, and the said wall is a plastic sandwich comprising, from the outside inwards, an outer skin (9) made of impact-resistant laminate, a fire-resistant plastic foam core (10) and an inner skin (11) made of laminate, resistant to corrosion at relatively elevated temperature.

7. Catalytic unit according to Claim 1, characterized in that, on the one hand, the treatment vessel (17) forms a consumable and interchangeable cartridge, according to the degree of inactivation of the catalytic material contained by the said cartridge, and, on the other hand, the catalytic unit (2) is arranged to provide access to the said cartridge, and to replace a spent cartridge by a new cartridge, with closure of the unit.

8. Motor vehicle provided with an internal combustion heat engine (3), equipped with a catalytic unit (2) according to any of Claims 1 to 7, characterized in that the catalytic unit (2) communicates with the exhaust manifold (4) of the heat engine, in a leakproof manner, that is to say without introduction of auxiliary air to the chemical conversion of the pollutants.

9. Vehicle according to Claim 8, characterized in that the pipe (5) connecting the exhaust manifold and the catalytic unit (2) is made of a composite plastic material.

## Patentansprüche

1. Katalysator (2) zur chemischen Umwandlung der Hauptverunreinigungen von Abgasen eines inneren Verbrennungsmotores (3) in einem Schritt, mit einem Behandlungsbehälter, der mit einem Einlaß (23) für die zu behandelnden Abgase und mit einem Auslaß (24) für die behandelten Abgase versehen ist, wobei im Behälter eine Masse (251 - 257) eines katalytischen Materials angeordnet ist, das für den Durchtritt der Abgase zwischen dem Einlaß und dem Auslaß des Behälters durchlässig ist, wobei das katalytische Material aus einem katalytischen Werkstoff hergestellt ist, der, außer jeglichem Substrat zum Tragen des katalytischen Werkstoffes, durch eine Teilsinterung unter Verbleiben von Durchtritten oder offenen Poren (1a) zur inneren Zirkulation von Abgasen in Kontakt mit dem katalytischen Werkstoff geformt wurde, dadurch gekennzeichnet, daß die Abgase als Hauptbestandteile Wasserdampf, Kohlenmonoxid, rückständige Kohlenwasserstoffe und Stickoxide, ohne Zusatz von ergänzender Luft oder ergänzendem Sauerstoff enthalten, daß der für die chemische Reaktion des Gases mit Wasser spezifische katalytische Werkstoff im wesentlichen aus einem Metall oder einer Mischung der Metalle, ausgewählt aus der Gruppe bestehend aus Eisen, Nickel, Kupfer, Kobalt, Chrom und Cadmium gebildet ist, und daß die Abgase in Berührung mit der metallischen Oberfläche des katalytischen Materials zirkulieren.

2. Katalysator nach Anspruch 1, dadurch gekennzeichnet, daß das katalytische Material in Form von Teilchen (1), beispielsweise als Grains oder Körner, oder als vorgeformte Pellets (Fig. 2) vorliegt.

3. Katalysator nach Anspruch 1, dadurch gekennzeichnet, daß das katalytische Material in Form eines Formlings (Fig. 3) geformt ist.

4. Katalysator nach Anspruch 2, dadurch gekennzeichnet, daß die Masse an katalytischem Material aus zumindest einer Schicht an Teilchen des genannten Materials besteht, die zwischen zwei diese Teilchen haltende Gitter (23, 24, 261 - 266) angeordnet sind und zwar zwischen dem Einlaß (23) und dem Auslaß (24) des Behandlungsbehälters.

5. Katalysator nach Anspruch 3, dadurch gekennzeichnet, daß die Masse des katalytischen Materials aus zumindest einem Formling (Fig. 3) des Materials besteht, der zwischen dem Einlaß (23) und dem Auslaß (24) des Behandlungsbehälters (17) gehalten ist.

6. Katalysator nach Anspruch 1, dadurch gekennzeichnet, daß er eine ganzheitliche Wand (6, 7, 8) aufweist, die einen Raum umgrenzt, in dessen Innerem der Behandlungsbehälter (17) angeordnet ist, und wobei die Wand eine Kunststoff-Sandwich- Struktur ist, die, von der Außenseite zur Innenseite gesehen, eine Außenhaut (9) aus einem schock-absorbierenden Schichtstoff, einen Kern (10) aus nicht brennbarem Kunststoffschaum und eine Innenhaut (11) in Schichtbauweise aufweist, die gegenüber relativ hohen Temperaturen korrosionsbeständig ist.

7. Katalysator nach Anspruch 1, dadurch gekennzeichnet, daß einerseits der Behandlungsbehälter (17) als eine verbrauchbare und entsprechend dem Grad der Inaktivierung des in der Kartusche enthaltenen Materials austauschbare Kartusche ausgebildet ist, und daß andererseits der Katalysator (2) derart ausgebildet ist, daß, über einen Verschluß des Katalysators, Zugang zu der Kartusche besteht, und eine verbrauchte Kartusche durch eine neue Kartusche ersetzbar ist.

8. Kraftfahrzeug mit einem inneren Verbrennungsmotor (3), der mit einem Katalysator (2) nach einem der Ansprüche 1 bis 7 ausgestattet ist, dadurch gekennzeichnet, daß der Katalysator (2) mit dem Auspuffsammler (4) des Motores nach außen dichtend in Verbindung steht, d.h. ohne Einführung von zusätzlicher Luft zur chemischen Umwandlung der Verunreinigungen.

9. Kraftfahrzeug nach Anspruch (8), dadurch gekennzeichnet, daR die Leitung (5), die den Auspuffsammler und den Katalysator (2) verbindet, aus einem Kunststoffverbundmaterial hergestellt ist.
